# EUROPEAN PATENT APPLICATION

(11) **EP 4 471 521 A1**
(43) Date of publication of application: **04.12.2024**
(21) Application number: 23176485.3
(22) Date of filing: 31.05.2023
(51) Int. Cl.: G05B 19/418, G01N 21/88, G06T 7/00

(54) **COMPUTER-IMPLEMENTED METHOD FOR AN INLINE QUALITY CONTROL OF A PRODUCTION PROCESS**

(71) Applicant: BASF SE, 67056 Ludwigshafen am Rhein (DE)
(72) Inventor: Juling, Hanne, Hong Kong (HK); Kutschera, Michael, 67056 Ludwigshafen am Rhein (DE); Ramos da Silva Junior, Mario, 67059 Ludwigshafen am Rhein (DE); La Spina, Guiseppe, 49448 Lemfoerde (DE); Staudt, Dorothee Selma, 67056 Ludwigshafen am Rhein (DE)
(74) Representative: Maiwald GmbH

(57) **Abstract**

Computer-implemented method for an inline quality control of a production process and for an improvement of a product quality, comprising: providing a quality control model trained to describe a relation between an appearance of a surface of a semi-finished product and a position of one or more defects in the surface of the semi-finished product (S10); obtaining at least one quality image of at least a part of a surface of a semi-finished product in a production line after at least a first process step during a production process of the semi-finished product (S20); determining defect data by utilizing the quality control model and the obtained at least one quality image fed into the quality control model, wherein the defect data comprises at least a target-comparison of the semi-finished product (S30); providing the defect data (S40).

## Description

### TECHNICAL FIELD

The present disclosure relates to a computer-implemented method for an inline quality control of a production process and for an improvement of a product quality, a device for an inline quality control of a production process and for an improvement of a product quality, a system for an inline quality control of a production process and for an improvement of a product quality, a use of training data for training a quality control model.

### TECHNICAL BACKGROUND

Production lines for producing sandwich panels, continuous sandwich panels, discontinuous sandwich panels, laminate boards, pipes or the like are state of the art and widely used. Such production lines comprise several process steps, wherein every process step leads to a further development stage of the panels, the laminate boards or the like. After every process step, the resulting panels, the laminate boards or the like serves as input quality for the working step in the production line. It has been found that a further need exists provide a possibility for controlling such a production process.

### SUMMARY

It is an object of the present disclosure to provide a possibility for improving/controlling the product development process and for an improving a product quality. It is in particular an object of the present disclosure to provide means to improve such a product development process and to improve a product quality. These and other objects, which become apparent upon reading the following description, are solved by the subject matter of the independent claims. The dependent claims referred to preferred embodiments of the present disclosure.

According to a first aspect of the present disclosure a computer-implemented method for an inline quality control of a production process and for an improvement of a product quality is provided, comprising: providing a quality control model trained to describe a relation between an appearance of a surface of a semi-finished product and a position of one or more defects in the surface of the semi-finished product; obtaining at least one quality image of at least a part of a surface of a semi-finished product in a production line after at least a first chemical process step i.e. first chemical production step during a production process of the semi-finished product; determining defect data by utilizing the quality control model and the obtained at least one quality image fed into the quality control model, wherein the defect data comprises at least a target-comparison, i.e. a variance analysis, of the semi-finished product; providing the defect data.

The term inline quality control, as used herein, and means that the quality control is carried out during a process steps and/or after a process step in a production process and not only on the end product. The term production process, as used herein, is to be understood broadly and relates to any process configured to produce a semi-finished product or finished product. The term quality control model, as used herein, is to be understood broadly and relates to any trained model configured to describe a relation between input parameters, such as an appearance of a surface (e.g. color value of one or more pixels) of a semi-finished product and/or input/production process parameter (e.g. temperature of a joining process) and/or process boundary conditions (e.g. humidity), and a position of one or more defects of the semi-finished product. The term semi-finished, as used herein, is to be understood broadly and relates to product, which is not finished yet. In other words, a semi-finished product may require some further process steps to become a finished product. The term quality image, as used herein, is to be understood broadly and relates to image data configured to describe a condition of a semi-finished product. The quality image may be obtained by a visual camera arranged in the production line, in particular in the area of a certain process step. The term defect data, as used herein, is to be understood broadly and relates to any data configured to describe a deviation from a target state of the semi-finished product. The defect data may comprise any variance analysis, i.e. a comparison of an actual condition of the semi-finished product and a target condition of the semi-finished product. In an example, a position of a defect (e.g. Cartesian coordinates or other virtual coordinate systems of the defect), an identification of a defect (e.g. a hole, too much or too little product components, e.g. an adhesion promoter) may also be provided. The defect data may be provided for further analysis by means of a visualization (e.g. a dashboard or a display). In a first aspect, the defect data may be used reject the semi-finished product. In a further aspect, the defect data may be used to adapt the production process (e.g. adaption of one or more process parameters) in order to prevent further defects in producing of semi-finished product in this process step of the production line. In such an example, not only the defects on the product may be provided as defect data, but also the production process parameters present/used and/or other circumstances that prevailed during the occurrence of the defects.

The trained quality model may be an artificial intelligence module. The artificial intelligence module may be an entity that processes one or more inputs into one or more outputs by means of an internal processing chain that typically has a set of free parameters. The internal processing chain may be organized in interconnected layers that are traversed consecutively when proceeding from the input to the output. Many artificial intelligence modules are organized to process an input having a high dimensionality into an output of a much lower dimensionality. For example, an image in HD resolution of 1920 x 1080 pixels lives in a space having a 1920 x 1080 = 2,073,600 dimensions. Additionally, it is possible that the image to be analyzed is provided as a combination and/or overlay of multiple images. It is also possible to combine further captured data with such image data, for example material data of the semi-finished product or the finished product could be added to the image data. A common job for an artificial intelligence module is to classify images into one or more categories based on, for example, whether they contain certain objects. The output may then, for example, give, for each of the to-be-detected objects, a probability that the object is present in the input image. This output lives in a space having as many dimensions as there are to-be-detected objects. Typically, there are on the order of a few hundred or a few thousand to-be-detected objects. Such a module is termed "intelligent" because it is capable of being "trained." The module may be trained using records of training data. A record of training data comprises training input data and corresponding training output data. The training output data of a record of training data is the result that is expected to be produced by the module when being given the training input data of the same record of training data as input.

In other words, the present disclosure is based on the finding that a production process with a plurality of process steps, e.g. chemical process steps, is in general subject to quality problems. In case of an occurrence of such quality problems in an early state of the production process (e.g. in one of the first chemical process steps) all subsequent process steps may be unnecessary as the semi-finished product or the final product may then be reject. Sometimes production processes may also be not stable and therefor generate a high share of reject. The present disclosure proposes to solve these issues by imaging a surface of a semi-finished product during the production process in a work place of the production line (i.e. inline quality control) and to determine defects. The detection is based on a trained quality control model, which may continuously be trained or developed further in order to detect also new defects. This may be advantageous in terms of quality control of the semi-finished products, of an increased product quality, of a reduced reject rate, of increased efficiency. In a further aspect, the present disclosure may be used not only for the detection of defects at an early stage of the product, but also for the improvement of the production process as such. In this respect, the defect data may further comprise process parameter data present at the occurrence of a respective defect.

In an embodiment, the defect data may comprise a classification of defects. The classification of defects may comprise a type of defect (e.g. too little adhesion promoter, not enough material, too little height, void, foreign particle, size deviation etc.). This may be advantageous in terms of analysis possibilities for further processing. This may help to detect defect origins within the production process.

In an embodiment, the quality control model may be continuously trained with the obtained quality images during the production process. The continuous training may also comprise further inputs by means of an interface from a technician (e.g. in case a new defect category is found).

Alternatively or in addition, some kind of learning loops may be applied to the quality control model. In other words, the quality control model may comprise an ability to learn continually from a stream of the quality images and corresponding defect data. This may advantageously increase a quality of the process and therefor a quality of the product. For such learning loops, for example, the defect data, which includes information about the defects/defect categories and may additionally comprise further information about the process parameters, can be used as training data. For example, respective process steps/aspects can be monitored for this purpose (e.g. Distribution of the adhesion promoter, physical effects occurring during production). This makes it possible to use the quality control model to optimize the production process with respect to the adjustable process parameters. Further analysis data (e.g. laboratory/operator analysis data of the semi-finished products, the finished products and/or of the input products) can also be associated with the defect data or labeled with the training data. In addition, the defect data can be made available for further analysis. Moreover, such a trained quality control module may either be used to directly control the production process, e.g. controlling some of the adjustable process parameters, and/or to issue recommendations to operators and/or development personnel. Such a recommendation to the operating personnel can, for example, be to use more adhesion promoter. Alternatively, the quality control module can also set and monitor this independently. A further recommendation can be, for example, that either more adhesion promoter should be used or, alternatively, another adhesion promoter with a higher effectiveness should be used. The latter may, for example, also be used as a development suggestion. Such a recommendation or adjustment with respect to the amount and/or type of adhesion promoter can be made, for example, on the basis of the defect analysis, if it is found, for example, that the semi-finished product and/or the final product does not have appropriate bond strength.

In an embodiment, the quality control model may further describe a relation between at least two input parameters used to produce a respective semi-finished product and respective determined defect data. The term input parameter or process parameter, as used herein, relates to any parameters used to produce a semi-finished product. The input parameter may comprise a pressure, a velocity, etc. The input/process parameter may comprise further environmental parameters such as humidity, room temperature, and any further sensor data, etc. The input/process parameter may comprise further product parameters such as content of a layer, thickness of a layer, size of layer etc. This may advantageously increase analysis possibilities. This may advantageously be a basis for process adaption. The relation may be used to minimize a defect occurrence (e.g. to zero).

In an embodiment, the method may further comprise the step recording one or more input parameters used to produce the semi-finished product and providing recorded input parameter data. The recorded input parameter may be transmitted to a database for further processing (e.g. data analysis, product development). This may advantageously increase analysis possibilities.

In an embodiment, the method may further comprise the step determining one or more optimized input parameter based on the recorded input parameter data and the quality control model. The determining may comprise an optimization algorithm in order to minimize a defect occurrence (e.g. design of experiments, genetic algorithm, gradient descent).

In an embodiment, the process step may be an application of an adhesion promoter by means of an oscillating application rake or nozzles; a polyurethane foam process; a process step during the production of the product, wherein the finished product is a continuous sandwich panel and/or an insulated pipe and/or a laminated board and/or a discontinuous sandwich panel; a heat curing and pressing or a cutting and cooling. The application of such products, such as the application of an adhesion promoter, can be carried out by different application methods. In one example, liquid and/or semi liquid materials may be applied using an oscillating application rake or nozzles. In this case, the rake, the nozzles and/or the distribution of the material onto the semi-finished product can be monitored and used as further input or training data for the quality control model. The process step may also be a polyurethane foam process. In this case, the foaming process can be monitored, for example, the so-called bow wave that forms during the foaming process as a result of the chemical reaction that takes place may be monitored. This data may also be used as input or training data for the quality control model.

In an embodiment, the defect may be a deviation from one of the following target conditions: a contamination, a pore, a quantity, a thickness, a layout, a distribution, a physical quantity, an optical appearance, a mechanical performance, a thermal performance, and/or a homogeneity. Moreover, the defect may also be a deviation of target production conditions, e.g. a deviation in the foaming process e.g. of the chemical reaction speed and/or derived by monitoring the bow wave or a deviation of the distribution of the adhesive promoter derived by monitoring the nozzles or the oscillating application rake.

In an embodiment, at least one visual/optical camera arranged in the production line may be used to obtain the at least one quality image. The visual/optical camera may be a RGB camera. The visual/optical camera may comprise an interface for communication with a processing unit. In an example, the image data to be analyzed is provided as a combination and/or overlay of multiple images. It is also possible to combine further captured data with such image data, for example material data of the semi-finished product or the finished product could be added to the image data.

A further aspect relates to a device for an inline quality control/improvement of production process and for an improvement of a product quality, comprising: a first providing unit configured to provide a quality control model trained to describe a relation between an appearance of a surface of a semi-finished product and a position of one or more defects in (the surface of) the semi-finished product; an obtaining unit configured to obtain at least one quality image of at least a part of a surface of a semi-finished product in a production line after at least a first process step during a production process of the semi-finished product; a determining unit configured to determine defect data by utilizing the quality control model and the obtained at least one quality image fed into the quality control model, wherein the defect data comprises at least a target/actual-comparison of the semi-finished product; a second providing unit configured to provide the defect data. The first providing unit, the obtaining unit, the determining unit, the second providing unit are described as functional units. The functional units may be implemented using hardware, software, and/or a combination thereof. For example, hardware units may be implemented using processing circuitry such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, or any other device capable of responding to and executing instructions in a defined manner. The hardware unit may include local area network (LAN), the Internet, a wide area network (WAN), or combinations thereof. The functionality of any given functional unit of the present disclosure may be distributed among multiple hardware units that are connected via interface circuits. The obtaining unit may be a visual/optical camera.

A further aspect of the present disclosure relates to a system for an inline quality control/improvement of a production process and for an improvement of a product quality, comprising: a device as described above and a production line.

In an embodiment, the production line may be a continuous production line, a semi-continuous production line, or a dis-continuous production line; wherein the production line is a panel production line, a laminate board production line, a block foam production line, or a formed/molded parts production line, a pipe insulation production line.

A further aspect relates to a use of training data for training a quality control model describing a relation between an appearance of a surface of a semi-finished product and a position of one or more defects in the surface of the semi-finished product.

A further aspect relates to a trained quality control model, wherein the training features for the training of the quality control model comprise the appearance of a surface of a semi-finished product and the target-comparison of the semi-finished product (S30).

A last aspect relates to a computer program element with instructions, which, when executed on computing devices of a computing environment, is configured to carry out the steps of the method described above in a system described above.

### BRIEF DESCRIPTION OF THE DRAWINGS

In the following, the present disclosure is described exemplarily with reference to the enclosed figures, in which
- **Figure 1**: is a schematic view of a method according to the preferred embodiment of the present disclosure;
- **Figure 2**: is a schematic view of a device according to an embodiment of the present disclosure; and
- **Figure 3**: is a schematic view of a system according to an embodiment of the present disclosure.

### DETAILED DESCRIPTION OF EMBODIMENT

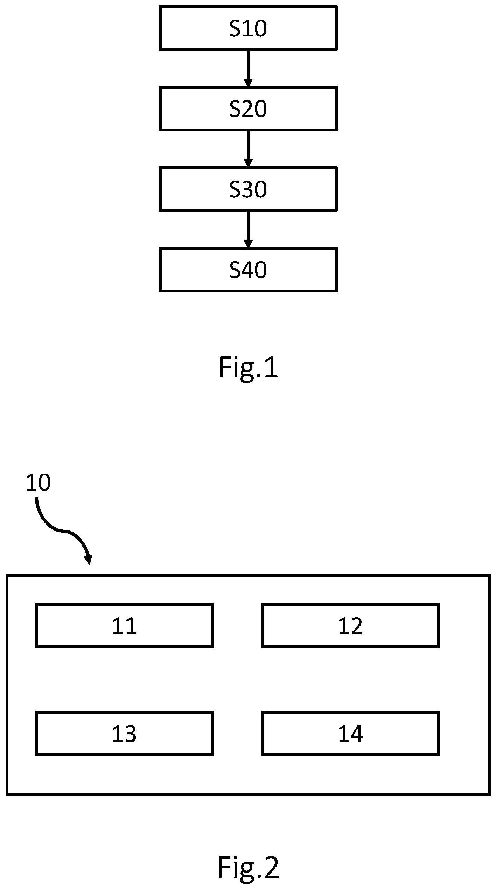

Figure 1 is a schematic view of a method according to the preferred embodiment of the present disclosure. The method is used for an inline quality control of a production process. The method may further lead to an increased quality of product produced within the production process.

In a first step S10, a quality control model trained to describe a relation between an appearance of a surface of a semi-finished product and a position of one or more defects in the surface of the semi-finished product is provided. The semi-finished product is a continuous sandwich panel for insulating a house. Alternatively, the product may be different type of panel, a block foam, a formed part, a molded part. The semi-finished product is not limited to these examples. The semi-finished product is produced in a continuous production line. Alternatively, the production line may semi-continuous or dis-continuous. The quality control model may continuously trained with obtained quality images during the production process. The quality control model may further describe a relation between one or more input parameters used to produce a respective semi-finished product and respective determined defect data. The defect is in the present example a deviation from target condition. The defect is for example a void. Alternatively or in in addition, the defect may be one of the following a contamination, a pore, a quantity, a thickness, a layout, a distribution, a physical quantity, an optical appearance, a mechanical performance, a thermal performance, and/or a homogeneity. The method may comprise a classification of defects.

Step S20 comprises obtaining at least one quality image of at least a part of a surface of a semi-finished product in a production line after at least a first process step during a production process of the semi-finished product. The process step is in the present example an application of an adhesion promoter at a production of continuous sandwich panels. The at least one quality image is obtained by means of an optical camera arranged in the production line.

Step S30 comprises determining defect data by utilizing the quality control model and the obtained at least one quality image fed into the quality control model, wherein the defect data comprises at least a target/actual-comparison of the semi-finished product.

Step S40 comprises providing the defect data. The defect data may be provided by means of a dashboard.

Figure 2 shows a device 10 for an inline quality control of a production process according to an embodiment. The device 10 comprises a first providing unit 11 configured to provide a quality control model trained to describe a relation between an appearance of a surface of a semi-finished product and a position of one or more defects in (the surface of) the semi-finished product; an obtaining unit 12 configured to obtain at least one quality image of at least a part of a surface of a semi-finished product in a production line after at least a first process step during a production process of the semi-finished product; a determining unit 13 configured to determine defect data by utilizing the quality control model and the obtained at least one quality image fed into the quality control model, wherein the defect data comprises at least the target-comparison of the semi-finished product (S30); a second providing unit 14 configured to provide the defect data.

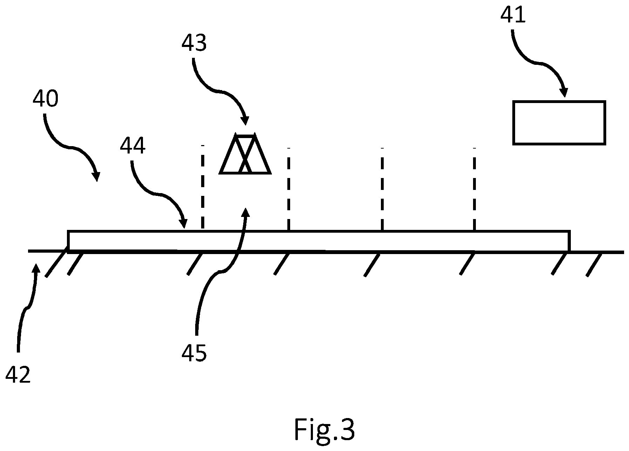

Figure 3 shows a system 40 for an inline quality control of a production process, comprising a device 41 as described in Figure 2 and a production line 42. The production line 42 is in the present example a continuous sandwich panel production line for a sandwich panel 44. A visual/optical camera 43, e.g. a RBG camera, is arranged above the production line 42 for a process step area 45. The visual/optical camera 43 is in wireless connection with the device 41.

The present disclosure has been described in conjunction with a preferred embodiment as examples as well. However, other variations can be understood and effected by those persons skilled in the art and practicing the claimed invention, from the studies of the drawings, this disclosure and the claims. Notably, in particular the steps S10 to S40 can be performed in any order, i.e. the present disclosure is not limited to a specific order of these steps. Moreover, it is also not required that the different steps are performed at a certain place or at one place, i.e. each of the steps may be performed at a different place using different equipment/data processing units. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

### REFERENCE SIGNS

- 10,41: device
- 11: first providing unit
- 12: obtaining unit
- 13: determining unit
- 14: second providing unit
- 40: system
- 42: production line
- 43: optical/visual camera
- 44: sandwich panel
- 45: process step area

- S10: providing a quality control model
- S20: obtaining at least one quality image
- S30: determining defect data
- S40: providing defect data

## Claims

1. Computer-implemented method for an inline quality control a production process and for an improvement of a product quality, comprising:
providing a quality control model trained to describe a relation between an appearance of a surface of a semi-finished product and a position of one or more defects in the surface of the semi-finished product (S10);
obtaining at least one quality image of at least a part of a surface of a semi-finished product in a production line after at least a first process step during a production process of the semi-finished product (S20);
determining defect data by utilizing the quality control model and the obtained at least one quality image fed into the quality control model, wherein the defect data comprises at least a target-comparison of the semi-finished product (S30);
providing the defect data (S40).

2. The method according to claim 1, wherein the defect data comprises a classification of defects.

3. The method according to claim 1 or 2, wherein the quality control model is continuously trained with the obtained quality images during the production process.

4. The method according to any one of the preceding claims, wherein the quality control model further describes a relation between at least two input parameters used to produce a respective semi-finished product and respective determined defect data.

5. The method according to claim 4, further comprising the step recording one or more input parameters used to produce the semi-finished product and providing recorded input parameter data.

6. The method according to claim 4 and 5, further comprising the step determining one or more optimized input parameter based on the recorded input parameter data and the quality control model.

7. The method according to any one of the preceding claims, wherein the process step is one of the following:
an application of an adhesion promoter by means of an oscillating application rake or nozzles;
a polyurethane foam process;
a process step during the production of the product, wherein the finished product is a continuous sandwich panel and/or an insulated pipe and/or a laminated board and/or a discontinuous sandwich panel;
heat curing and pressing
cutting and cooling.

8. The method according to any one of the preceding claims, wherein the defect is a deviation from one of the following target conditions: a contamination, a pore, a quantity, a thickness, a layout, a distribution, a physical quantity, an optical appearance, a mechanical performance, a thermal performance, and/or a homogeneity.

9. The method according to any one of the preceding claims, wherein at least one visual/optical camera arranged in the production line is used to obtain the at least one quality image.

10. A device (10) for an inline quality control of a production process and for an improvement of a product quality, comprising:
a first providing unit (11) configured to provide a quality control model trained to describe a relation between an appearance of a surface of a semi-finished product and a position of one or more defects in (the surface of) the semi-finished product;
an obtaining unit (12) configured to obtain at least one quality image of at least a part of a surface of a semi-finished product in a production line after at least a first process step during a production process of the semi-finished product;
a determining unit (13) configured to determine defect data by utilizing the quality control model and the obtained at least one quality image fed into the quality control model, wherein the defect data comprises at least a target-comparison of the semi-finished product;
a second providing unit (14) configured to provide the defect data.

11. A system (40) for an inline quality control of a production process and for an improvement of a product quality, comprising:
a device (41) according to claim 10;
a production line (42).

12. The system according to claim 11,
wherein the production line is a continuous production line, a semi-continuous production line, or a dis-continuous production line;
wherein the production line is a panel production line, a block foam production line, or a formed/molded parts production line.

13. Use of training data for training a quality control model describing a relation between an appearance of a surface of a semi-finished product and a position of one or more defects in the surface of the semi-finished product.

14. Trained quality control model, wherein the training features for the training of the quality control model comprise the appearance of a surface of a semi-finished product and the position of one or more defects and/or a target-comparison of the semi-finished product (S30).

15. Computer program element with instructions, which, when executed on computing devices of a computing environment, is configured to carry out the steps of the method according to any one of the claims 1 to 9 in a system according to claim 11 or claim 12.
